Europäisches Patentamt

European Patent Office

Office européen des brevets

(11) Publication number: **0 277 029**
**A2**

# EUROPEAN PATENT APPLICATION

(21) Application number: 88300765.0

(22) Date of filing: 29.01.88

(51) Int. Cl.⁴: **H 02 G 1/08**

(30) Priority: 29.01.87 AU 78/87

(43) Date of publication of application:
03.08.88 Bulletin 88/31

(84) Designated Contracting States:
AT BE CH DE ES FR GB GR IT LI LU NL SE

(71) Applicant: THE COMMONWEALTH INDUSTRIAL GASES
LIMITED
46-56 Kippax Street
Surry Hills, NSW 2010 (AU)

(72) Inventor: Catchpoole, Donald James
35 Hampden Road
Pennant Hills New South Wales 2041 (AU)

Shervington, Evelyn Arthur
109b Louisa Road
Birchgrove New South Wales 2120 (AU)

(74) Representative: Wickham, Michael
c/o Patent and Trademark Department The BOC Group
plc Chertsey Road
Windlesham Surrey GU20 6HJ (GB)

(54) Blow gun.

(57) A line-feeder blow gun (1) adapted to be powered by a
bottle of compressed or liquified carbon dioxide or other gas.
The gun includes a magazine chamber (22) to hold a quantity of
draw cord (28) stored on a ball, skein, roll or reel (23) and an
outlet nozzle (27) adapted to make connection with an open
end of a tubular conduit for supply of gas into the conduit at the
same time as a free end of the cord (28) extends into the
conduit.

EP 0 277 029 A2

**Description**

BLOW GUN

BACKGROUND OF THE INVENTION

1. Field of the Invention

This invention relates to apparatus for feeding a pull-cord through a tubular conduit or duct for the subsequent hauling of a cable or other article through or along the conduit or duct.

The invention was devised primarily for electricians to use when installing the internal wiring of buildings and is described in that context hereinafter, but it will be appreciated that it is applicable to other situations in which it is necessary to extend a pull-cord through a, possibly tortuous, tubular conduit or duct.

2. Description of the Prior Art

In the construction of ferro-concrete buildings it is customary to bury a reticulation of tubular conduits in the walls and floor slabs as they are being poured. Thereafter the electrician has to pass electrical cables or wires through the conduits which customarily include bends or elbows.

Initially the electrician threads a draw-cord along the proposed cable path and then hauls the wire or cable therealong.

One known way of proceeding is to block all conduit openings except for the start and end of the proposed path and then blow a bobbin holding a length of draw-cord along the path by means of compressed air. An end of the draw-cord is held at the start of the path and the cord unwinds from the bobbin as it moves along the path until, if all goes well, the bobbin reaches the far end. That expedient works reasonably well if the conduit is free of minor obstructions and if the path does not include many abrupt bends, T-intersections or elbows. However, if the conditions are unfavourable the bobbin is apt to jam or fail to negotiate the path. Furthermore, an air compressor is required on site.

SUMMARY OF THE INVENTION

An object of the present invention is to provide a portable gun adapted, in preferred embodiments, to be powered by a bottle of compressed or liquified carbon-dioxide or other gas including means for storing an unwindable ball, skein, roll or reel of cord and adapted to make connection with an open end of a tubular conduit for the supply of the gas thereinto at the same time as a free end of the cord extends from the gun into the conduit.

Thus, the free end of the cord may be secured to a small shuttle, better adapted to negotiate the conduit path than is a loaded bobbin, so as to be drawn from the gun through the conduit as the shuttle is blown therealong.

The invention consists in a line-feeder blow gun comprising a cord magazine chamber adapted to hold a quantity of draw-cord, an outlet nozzle on said magazine, through which cord may be drawn from the magazine, said outlet nozzle being adapted to at least partly seal against an open end of a tubular conduit, and manually operable valve means to control the flow of gas from a pressurised source through said nozzle and into said conduit.

It will be noted that the outlet nozzle is only required to "partly seal" against the conduit end. Clearly the better the seal, that is to say the more leak-proof the connection between nozzle and conduit, the more positive is the operation of the gun and the higher is its efficiency in terms of gas usage. However, it has been found that considerable leakage can be tolerated and as, in practice, the ends of conduits are frequently roughly sawn, some leakage is to be preferred to avoid the cost, time and difficulty inherent in preparing the conduit end for positive connection to the outlet nozzle. It is also safer as it avoids over-pressurising the conduit in the unlikely event that it is effectively completely blocked so that gas may not flow through it. Thus, in preferred embodiments the outlet nozzle is a simple frusto-conical or tapered nozzle adapted to enter the conduit until the outer surface of the nozzle comes against the inner periphery of the conduit mouth.

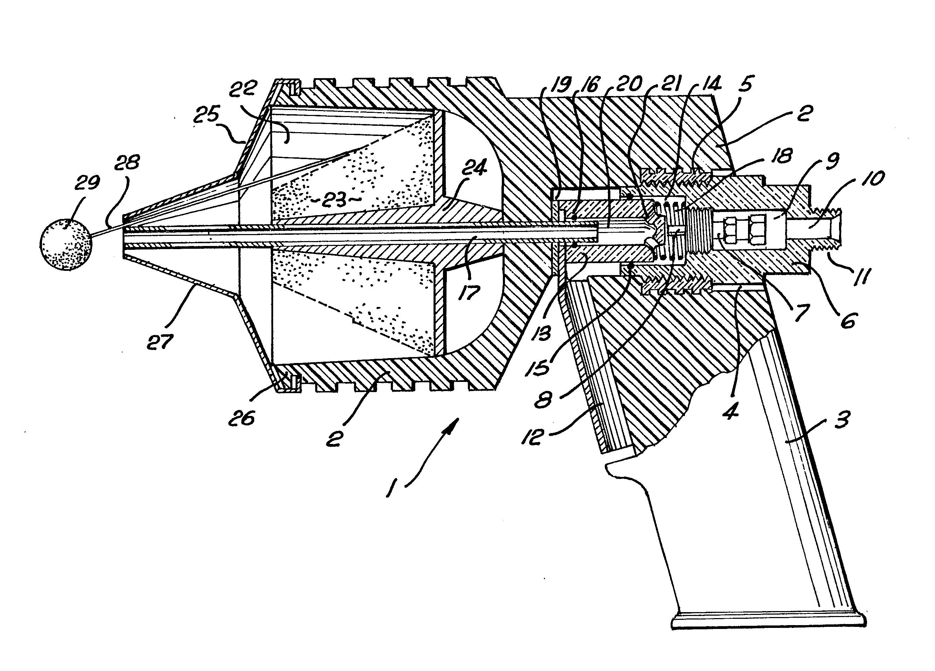

BRIEF DESCRIPTION OF THE DRAWING

By way of example, a preferred embodiment of the invention is described hereinafter with reference to the accompanying drawing which is a partly sectioned side view of a blow gun of the preferred embodiment.

DESCRIPTION OF THE PREFERRED EMBODIMENT

The blow gun 1 comprises a generally cylindrical body 2 with a pistol grip 3 projecting more or less radially therefrom at or near its rear end. The body 2 and pistol grip 3 are integrally formed from transfer moulded rubber.

A bore 4 extends from the rear of the body 2 and is fitted with a brass valve retaining insert 5. Insert 5 is internally threaded so as to receive a valve housing 6 also formed of brass which extends along bore 4. There is a conventional so-called schrader type valve 7 mounted within the housing 6. This valve is of a type commercially available under the trade name "Hahn". Essentially this valve (the internal detail of which is not shown) comprises a valve body with an inlet port at one end, an outlet port at its other end, an annular valve seat formed on the inner peripheral surface of the valve body between the two ports and a valve element adapted when contacting said seat to prevent gas flow from the inlet port to the outlet port. The valve 7 has a stem 8 protruding through the outlet port and force applied to the free end of the stem 8 may displace the valve element from its seat to allow gas to flow.

The inlet port is open to a chamber 9 within housing 6 and a communication passage 10 is provided to a threaded extension 11 adapted to receive a supply hose from a gas cylinder (not shown), say a cylinder of carbon-dioxide. Gas pressure from the cylinder normally holds the valve element within valve 7 against the seat.

Force is applied to the stem 8 to allow gas flow through valve 7 by means of a pivotally mounted trigger 12, bearing against a cylindrical plunger 13 which is axially slidable within a machined bore 14 within the housing 6.

The plunger 13 is sealed by an external O-ring 15 against the bore 14 element and by an internal O-ring 16 against the outer surface of a gas tube 17 extending from within the bore 14 element to beyond the front end of the gun 1. A compression spring 18 biases the plunger 13 away from stem 8 which in turn results in trigger 12 being biased against depression. Trigger 12 is mounted by means of a neatly fitting hole through which tube 17 passes and a washer 19 fits between the trigger 12 and gun body 2.

The plunger 13 has a bore 20 extending from one end which terminates adjacent its rear end. Two apertures 21 extend through the rear of plunger 13 and with bore 20 provide a through passage for the flow of gas admitted by valve 7 into the gas tube 17. The solid centre portion of the rear end surface of plunger 13 is used to contact the valve stem 8.

The gun body 2 has an enlarged and hollow front end portion to provide a magazine chamber 22 within which an unwindable ball or roll 23 of string may be placed.

The chamber 22 is pierced coaxially by the gas tube 17 and that tube may conveniently serve as a spindle for the support of the ball or roll. The ball or roll can be mounted on a spool 24 which neatly fits over the tube 17.

The front wall of the magazine chamber 22 is a detachable cover 25 which may be removed to enable the string to be loaded into the magazine. The cover 25 is secured in place by snap fitting over an annular rim 26 at the end of the gun body. Alternatively, bayonet catch formations, a coarse multi-start thread or other conventional means can be utilised. A resilient sealing washer or gasket (not shown) may be provided to render the closure leak-proof.

The front of the cover includes a hollow frusto-conical outlet nozzle 27 projecting forwardly of the gun. The minimum inner diameter of the nozzle 27 at its tip is somewhat larger than the outer diameter of the gas tube 17 to leave an annular opening therebetween through which the string 28 may be drawn.

In use an appropriate shuttle 29 is secured to the end of string 28 and a source of pressurised gas is connected to threaded extension 11. The shuttle 29 is placed into the conduit (not shown) through which the string is to be passed and nozzle 27 inserted into the conduit until it comes against the inner periphery of the conduit mouth to at least partly seal therewith. All conduit openings except that to which a cord is to be passed are blocked in the conventional manner. Operation of trigger 12 forces plunger 13 against stem 8 so that pressurised gas flows through valve 7. The gas flows through plunger 13 and into tube 17 before being expelled at the outlet nozzle 27 into the conduit. The flow of gas through the conduit carries shuttle 29 along the conduit to the unblocked opening and string 28 is drawn from ball or roll 23 on spool 24 as the shuttle moves along the conduit.

The term "draw-cord" as used herein is intended to embrace not only cord but also twine, string, mono-filaments and other similar pliable tensile articles.

The term "conduit" as used herein is intended to embrace not only conduits but also ducts, pipes, tubes and other articles having an elongate bore or lumen.

## Claims

1. A line-feeder blow gun (1) comprising a cord magazine chamber (22) adapted to hold a quantity of draw-cord (23), an outlet nozzle (27) on said magazine (22) through which cord (28) may be drawn from the magazine (22), said outlet nozzle (27) being adapted to at least partly seal against an open end of a tubular conduit, and manually operable valve means (12, 13, 7) to control the flow of gas from a pressurised source through said nozzle (27) and into said conduit.

2. A blow gun (1) as claimed in claim 1 wherein said outlet nozzle (27) is frusto-conical to enter said conduit until the outer surface of the nozzle comes against the inner periphery of the conduit mouth.

3. A blow gun (2) as claimed in claim 1 or claim 2 wherein said valve means (12, 13, 7) comprises a schrader type valve (7) activated by a manually operable trigger (12) to control the flow of gas.

4. A blow gun (1) as claimed in claim 3 wherein said trigger (12) bears against a cylinderical plunger (13) which is axially slideable in a bore (14) within said gun (1), said plunger (13) being disposed adjacent a protruding stem (8) of said valve (7) to apply force thereto upon operation of the trigger (12) to activate said valve (7).

5. A blow gun (1) as claimed in claim 4 wherein said plunger (13) includes a through passage (20, 21) for the flow of gas from said valve.

6. A blow gun (1) as claimed in any one of claims 1 to 6 further comprising a gun body having an enlarged and hollow front end portion (2) which forms said magazine chamber (22).

7. A blow gun (1) as claimed in claim 6 further comprising a detachable cover (25) which forms a wall of said magazine chamber (22) and comprises said outlet nozzle (27).

8. A blow gun (1) as claimed in claim 6 or claim 7 further comprising a gas tube (17) passing through said magazine chamber (22) to said outlet nozzle (27).

9. A blow gun (1) as claimed in claim 8 wherein said gas tube (17) is centrally mounted within said magazine chamber (22) to serve as a

5      0 277 029      6

spindle for a ball or roll (23) of cord (28).

10. A blow gun (1) as claimed in any one of claims 1 to 9 wherein said pressurised source comprises a cylinder of compressed gas.

4

0277029

15 03 88